# EUROPEAN PATENT APPLICATION

(11) **EP 2 675 117 A1**
(43) Date of publication of application: **18.12.2013**
(21) Application number: 11863133.2
(22) Date of filing: 08.04.2011
(51) Int. Cl.: H04L 12/56

(54) **ROUTING METHOD AND DEVICE FOR HOST IN MULTI-HOMING SITE**

(71) Applicant: Huawei Technologies Co., Ltd., Shenzhen, Guangdong 518129 (CN)
(72) Inventor: JIANG, Sheng, Shenzhen Guangdong 518129 (CN); LIU, Bing, Shenzhen Guangdong 518129 (CN)
(74) Representative: Thun, Clemens
(86) International application number: PCT/CN2011/072555
(87) International publication number: WO 2012/136006

(57) **Abstract**

Embodiments of the present invention provide a method and an apparatus for route selection of a host in a multihoming site. The method includes: receiving transition technology information sent by a client premises equipment CPE; associating the transition technology information with an Internet Protocol IP address of the CPE and recording association information in an entry; and performing route selection according to the association information in the entry. In the embodiments, the transition technology information is associated with the IP address of the CPE, that is, the CPE corresponds to a corresponding transition technology, so that a host is capable of clearly learning a transition technology used by a home network of the CPE. Therefore, a proper CPE can be selected during routing, and selecting a best route can be ensured.

## Description

### FIELD OF THE INVENTION

The present invention relates to the field of communications technologies, and in particular, to a method and an apparatus for route selection of a host in a multihoming site.

### BACKGROUND OF THE INVENTION

Currently, all public network addresses of Internet Protocol version 4 (IPv4) will be allocated in 2012. Therefore, many Carriers are considering about switching networks and users to Internet Protocol version 6 (IPv6) to resolve a problem of service development after IPv4 addresses run out.

Currently, many Carriers have large-scale networks to support existing IPv4 broadband services. In the initial stage of evolution to IPv6 networks, if all these networks are required to support IPv6, excessive investment may be resulted in, and an unpredictable problem may be caused due to network upgrading. Therefore, a mechanism which provides a quick IPv6 access method on an existing IPv4 network is required. The mechanism can still be compatible with IPv6 networks after networks are completely evolved into IPv6 networks in future. Currently, representative technologies of the mechanism are the 6rd and DS-Lite technologies.

The 6rd technology is described as follows: When user data needs to reach an IPv6 network through an IPv4 network, if a user sends an IPv6 data packet, the IPv6 data packet initiates a tunnel on a client premises equipment (Client premises Equipment, CPE) side of the user end and is encapsulated into an IPv6-in-IPv4 packet, so that the IPv4 network is capable of routing the IPv6 data packet as a common IPv4 data packet. When the encapsulated data packet reaches a 6rd provider edge, the provider edge (Provider Edge, PE) decapsulates the IPv6 data packet and forwards it to the IPv6 network. If the user sends an IPv4 data packet, the IPv4 data packet is routed by using a common method without encapsulation.

The DS-Lite technology is described as follows: When user data needs to reach an IPv4 network through an IPv6 network, if a user sends an IPv6 data packet, the IPv6 data packet can be routed directly; and if the user sends an IPv4 data packet, a tunnel is initiated on the CPE side, the IPv4 data packet is encapsulated into an IPv4-in-IPv6 data packet, the IPv6 network routes the IPv4-in-IPv6 data packet to a PE according to the method for processing the IPv6 data packet, and the PE decapsulates the IPv4-in-IPv6 data packet into the IPv4 data packet and forwards it to the IPv4 network.

However, transition technologies, such as the 6rd and DS-Lite, are transparent for a host; that is, a CPE is generally configured with a parameter related to the 6rd and DS-Lite. However, the host does not need to care about whether its uplink uses the 6rd transition technology, the DS-Lite transition technology, or the like. For the host, it only needs to learn that its uplink is capable of forwarding an IPv6/IPv4 data packet.

Based on the above reason, if the transition technologies apply to a multihoming (Multihoming) site, a certain defect is generated. The following simply describes the multihoming site to learn about the defect: A multihoming solution is a technology used to avoid loss due to Internet access interruption. It generally uses multiple Internet access links provided by different Internet service providers (Internet Service Provider, ISP). If a deployment mode of a multihoming site may enable a host to have multiple upper-level links for selection, a "next hop" selection needs to be performed when the host sends a data packet. RFC 4861(Neighbor Discovery) defines a default method for route selection, that is, the selection is performed according to a reachable state of the router or a polling method. However, if all the upper-level links use a transition technology but the host fails to learn a tunnel mode (IPv4-in-IPv6 or IPv6-in-IPv4) of a transition scenario, selecting a best next hop cannot be ensured by using only the RFC 4861 route selection method.

For example, the host is a dual-stack host and has IPv4 and IPv6 addresses, and a 6rd CPE and a DS-Lite CPE are routers that may be selected. In this case, no matter whether a destination address is an IPv4 address or an IPv6 address, the host has two next hops for selection. Obviously, it is better for an IPv6 data packet to be transmitted through the DS-Lite CPE because encapsulation and decapsulation are not required, while it is better for an IPv4 data packet to be transmitted through the 6rd CPE. According to the default rfc4861 route selection method, the host may select any one of the CPEs, so that an optimal effect cannot be achieved.

### SUMMARY OF THE INVENTION

Embodiments of the present invention provide a method and an apparatus for route selection of a host in a multihoming site, which enable the host to learn a transition technology used by a upper-level link, thereby selecting a better CPE for routing.

In one aspect, an embodiment of the present invention provides a method for route selection of a host in a multihoming site, including: receiving transition technology information sent by a CPE; associating the transition technology information with an IP address of the CPE and recording association information in an entry; and performing route selection according to the association information in the entry.

In another aspect, an embodiment of the present invention provides an apparatus for route selection of a host in a multihoming site, including: a receiving unit, configured to receive transition technology information sent by a CPE; an information association unit, configured to associate the transition technology information with an IP address of the CPE and record association information in an entry; and a route selection unit, configured to perform route selection according to the association information in the entry.

In the embodiments, transition technology information is associated with an IP address of a CPE, that is, the CPE corresponds to the corresponding transition technology, so that a host is capable of clearly learning a transition technology used by a home network of the CPE. Therefore, a proper CPE can be selected during routing, and selecting a best route can be ensured.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.

FIG. 1 is a schematic flowchart of a method for route selection of a host in a multihoming site according to an embodiment of the present invention;

FIG. 2 is a schematic flowchart of another method for route selection of a host in a multihoming site according to an embodiment of the present invention;

FIG. 3 is a schematic flowchart of another method for route selection of a host in a multihoming site according to an embodiment of the present invention;

FIG. 4 is a schematic flowchart of another method for route selection of a host in a multihoming site according to an embodiment of the present invention;

FIG. 5 is a schematic flowchart of another method for route selection of a host in a multihoming site according to an embodiment of the present invention;

FIG. 6 is a schematic structural diagram of an apparatus for route selection of a host in a multihoming site according to an embodiment of the present invention; and

FIG. 7 is a schematic structural diagram of another apparatus for route selection of a host in a multihoming site according to an embodiment of the present invention.

### DETAILED DESCRIPTION OF THE EMBODIMENT

The present invention is described with reference to the accompanying drawings and embodiments.

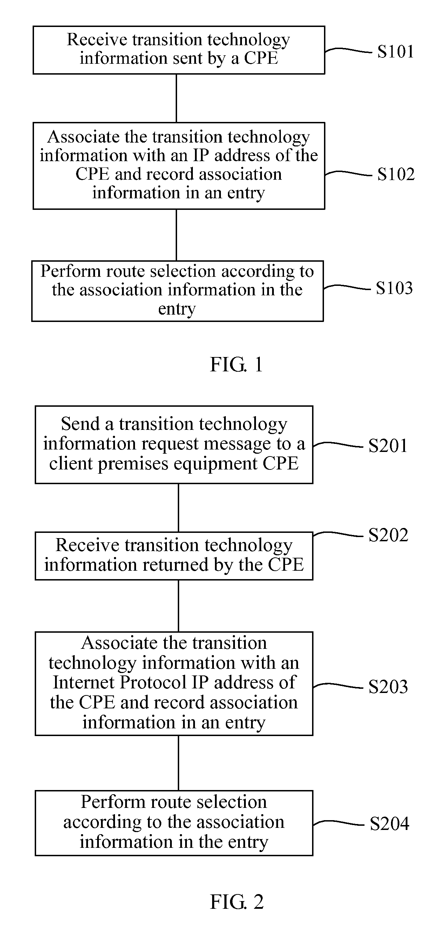

FIG. 1 is a schematic flowchart of a method for route selection of a host in a multihoming site according to an embodiment of the present invention. This embodiment describes the present invention from the perspective of a host. The method includes:

S 101: Receive transition technology information sent by a CPE.

In this embodiment of the present invention, the transition technology information in the CPE may be configured in advance, or may be some parameters, generated according to a certain rule, in a network message that is delivered by a DHCPv4 or DHCPv6 server and received by the CPE. The transition technology information may include: a tunnel mode, such as IPv4-in-IPv6 or IPv6-in-IPv4, used by a home network of the CPE, and an address conversion mode and a protocol conversion mode, such as NAT44 (IPv4 address conversion, whose typical application is the conversion between a private address and a public address) and NAT64 (the conversion between an IPv6 packet and an IPv4 packet, which belongs to protocol conversion), used by the home network of the CPE. In addition, if no transition technology is used, that is, if no information about the tunnel mode, the address conversion mode, the protocol conversion mode, and the like is included, the CPE uses the original IPv4/IPv6 for access by default.

Of course, the transition technology information in this embodiment of the present invention includes, but is not limited to, the above information. It may further include other more detailed transition information, for example, a specific transition technology solution such as 6rd or DS-Lite.

S102: Associate the transition technology information with an IP address of the CPE and record association information in an entry. The entry may be a routing entry, or may be an independent entry. The association information may be a mapping between the IP address of the CPE and its corresponding transition technology information.

S103: Perform route selection according to the association information in the entry.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

FIG. 2 is a schematic flowchart of another method for route selection of a host in a multihoming site according to an embodiment of the present invention. The method includes:

S201: Send a transition technology information request message to a client premises equipment CPE.

In this embodiment, to acquire transition information of an uplink for better routing, the host needs to send the transition technology information request message to the CPE. Currently, in most transition scenarios, user hosts are all dual-stack, that is, both an IPv4 address and an IPv6 address exist, and IPv4 and IPv6 can be used simultaneously for communication. Therefore, in this embodiment, the host may also send the transition technology information request message to the CPE by using multiple different methods.

As an embodiment of the present invention, the host can request transition technology information by using some existing request configuration messages such as a Dynamic Host Configuration Protocol for IPv4 Solicit (DHCPv4 Solicit) message, a Dynamic Host Configuration Protocol for IPv6 Solicit (DHCPv6 Solicit) message, or a Router Solicit (Router Solicit) message. The DHCPv4 Solicit message applies to a scenario where the CPE delivers the transition technology information by using an IPv4 protocol, while the DHCPv6 Solicit message and the Router Solicit message apply to a scenario where the CPE delivers the transition technology information by using an IPv6 protocol. Of course, this embodiment of the present invention does not limit a method used by the host for delivering the transition technology information request message. The host may even use a newly defined standard to send a dedicated transition technology information request message, instead of using an existing request configuration message to send the transition technology information request message.

S202: Receive transition technology information returned by the CPE.

In this embodiment of the present invention, the transition technology information in the CPE may be configured in advance, or may be some parameters, generated according to a certain rule, in a network message that is delivered by a DHCPv4 or DHCPv6 server and received by the CPE. The transition technology information may include: a tunnel mode, such as IPv4-in-IPv6 or IPv6-in-IPv4, used by a home network of the CPE, and an address conversion mode and a protocol conversion mode, such as NAT44 (IPv4 address conversion, whose typical application is the conversion between a private address and a public address) and NAT64 (the conversion between an IPv6 packet and an IPv4 packet, which belongs to protocol conversion), used by the home network of the CPE. In addition, if no transition technology is used, that is, if no information about the tunnel mode, the address conversion mode, the protocol conversion mode, and the like is included, the CPE uses the original IPv4/IPv6 for access by default.

Of course, the transition technology information in this embodiment of the present invention includes, but is not limited to, the above information. It may further include other more detailed transition information, for example, a specific transition technology solution such as 6rd or DS-Lite.

S203: Associate the transition technology information with an Internet Protocol IP address of the CPE and record association information in an entry.

S204: Perform route selection according to the association information in the entry.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

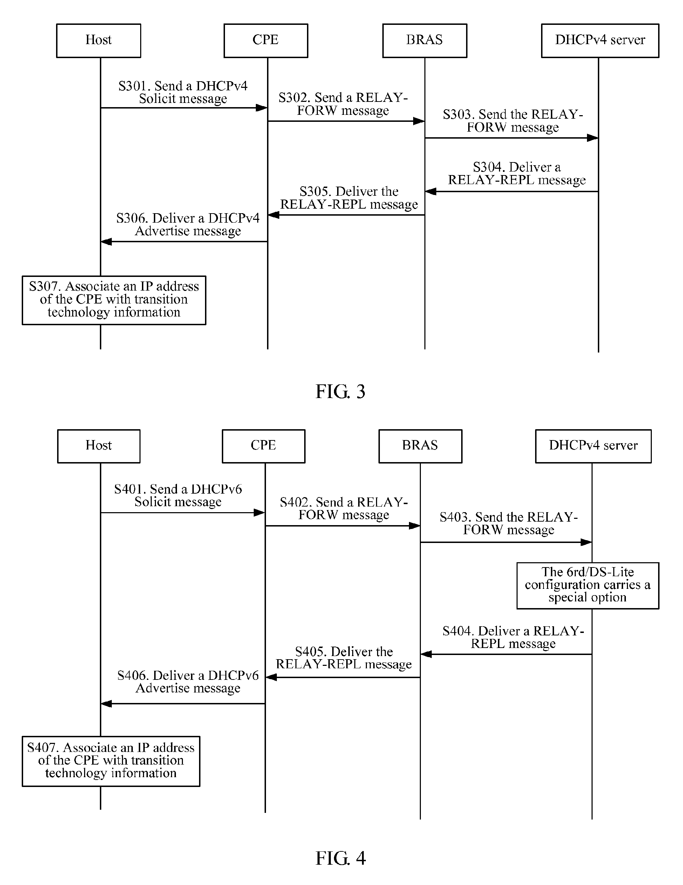

FIG. 3 is a schematic flowchart of another method for route selection of a host in a multihoming site according to an embodiment of the present invention. In this embodiment, transition technology information is delivered to the host by using DHCPv4. The method includes the following steps:

S301: The host sends a DHCPv4 Solicit message to a CPE.

Though the DHCPv4 Solicit message is mainly used to assign an IP address to the host, in this embodiment of the present invention, it may also be simultaneously served as a request message for the host to request acquiring of transition technology information.

S302: After receiving the DHCPv4 Solicit message, the CPE forwards it to a broadband remote access server (Broadband Remote Access Server, BRAS) in relay forward (RELAY-FORW) message mode. During the process, the CPE is served as a DHCPv4 relay agent to forward the message.

S303: After receiving the RELAY-FORW message, the BRAS, also served as a DHCPv4 relay agent, forwards the RELAY-FORW message to a DHCPv4 server.

S304: After receiving the RELAY-FORW message of the BRAS, the DHCPv4 server delivers a relay reply (RELAY-REPL) message to the BRAS.

S305: The BRAS forwards the RELAY-REPL message to the CPE.

S306: After receiving the RELAY-REPL message forwarded by the BRAS, the CPE adds transition technology information to a Dynamic Host Configuration Protocol for IPv4 Advertise (DHCPv4 Advertise) message and delivers it to the host. In this embodiment, for example, the CPE may add the transition technology information in the OPTION_Transitioninfo field of the DHCPv4 Advertise message.

S307: After receiving the DHCPv4 Advertise message to which the transition technology information is added, the host immediately associates an IP address of the CPE with the transition technology information for subsequent route selection.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

FIG. 4 is a schematic flowchart of another method for route selection of a host in a multihoming site according to an embodiment of the present invention. In this embodiment, transition technology information is delivered to the host by using DHCPv6. The method includes the following steps:

S401: The host sends a DHCPv6 Solicit message to a CPE.

S402: After receiving the DHCPv6 Solicit message, the CPE forwards it to a broadband remote access server (Broadband Remote Access Server, BRAS) in the mode of a RELAY-FORW message. During the process, the CPE is served as a DHCPv6 relay agent to forward the message.

S403: After receiving the RELAY-FORW message, the BRAS, also served as a DHCPv6 relay agent, forwards the RELAY-FORW message to a DHCPv6 server.

S404: After receiving the RELAY-FORW message of the BRAS, the DHCPv6 server delivers a relay reply (RELAY-REPL) message to the BRAS.

It should be noted that when a standardized transition technology, such as 6rd or DS-Lite, is used, the message itself delivered by the DHCPv6 server may carry some transition information.

S405: The BRAS forwards the RELAY-REPL message to the CPE.

S406: After receiving the RELAY-REPL message forwarded by the BRAS, the CPE adds transition technology information to a Dynamic Host Configuration Protocol for IPv6 Advertise (DHCPv6 Advertise) message and delivers it to the host. In this embodiment, for example, the CPE may add the transition technology information in the OPTION_Transitioninfo field of the DHCPv6 Advertise message. It should be noted that the transition technology information may be configured in the CPE in advance. When the message itself delivered in step S404 carries some transition information, the CPE may also extract the transition information and then perform certain processing to obtain required transition technology information.

S407: After receiving the DHCPv6 Advertise message to which the transition technology information is added, the host immediately associates an IP address of the CPE with the transition technology information for subsequent route selection.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

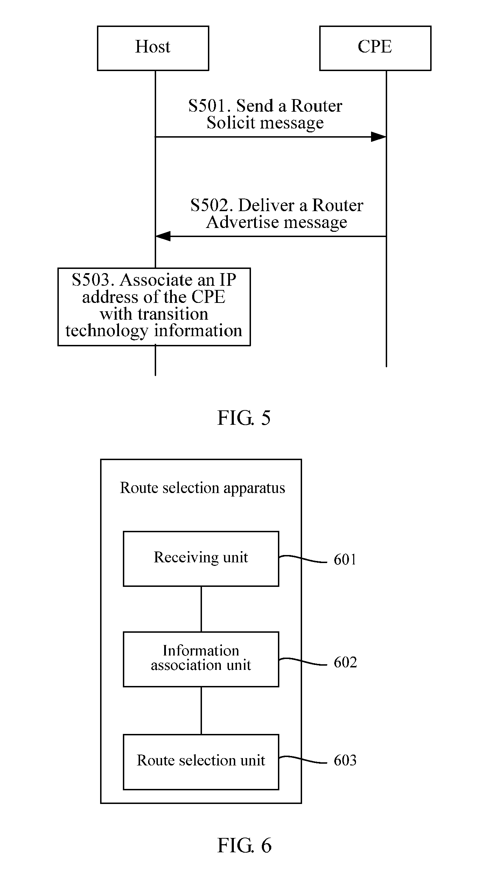

FIG. 5 is a schematic flowchart of another method for route selection of a host in a multihoming site according to an embodiment of the present invention. In this embodiment, transition technology information is delivered to the host by using neighbor discovery (Neighbor Discovery, ND). The method includes the following steps:

S401: The host sends a router solicit (Router Solicit) message to a CPE.

S402: After receiving the Router Solicit message, the CPE adds transition technology information to a router advertise (Router Advertise) message and delivers it to the host.

It should be noted that, in this embodiment, that "the host sends a Router Solicit message to a CPE" is not a prerequisite for the CPE to deliver the transition technology information, and the CPE may also automatically deliver the transition technology information to the host on the premise of receiving no Router Solicit message.

S403: After receiving the Router Advertise message to which the transition technology information is added, the host immediately associates an IP address of the CPE with the transition technology information for subsequent route selection.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

FIG. 6 is a schematic structural diagram of an apparatus for route selection of a host in a multihoming site according to an embodiment of the present invention. The apparatus includes a receiving unit 601, an information association unit 602, and a route selection unit 603, where:

The receiving unit 601 is configured to receive transition technology information sent by a CPE.

In this embodiment of the present invention, the transition technology information in the CPE may be configured in advance, or may be some parameters of a DHCPv4 or DHCPv6 server that are received by the CPE and are generated according to a certain rule. The transition technology information may include: a tunnel mode used by a home network of the CPE, and an address conversion mode and a protocol conversion mode used by the home network of the CPE. In addition, if no transition technology is used, that is, if no information about the tunnel mode, the address conversion mode, the protocol conversion mode, and the like is included, the CPE uses the original IPv4/IPv6 for access by default.

The information association unit 602 is configured to associate the transition technology information with an IP address of the CPE and record association information in an entry. The entry may be a routing entry, or may be an independent entry. The association information may be a mapping between the IP address of the CPE and its corresponding transition technology information.

The route selection unit 603 is configured to perform route selection according to the association information in the entry.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

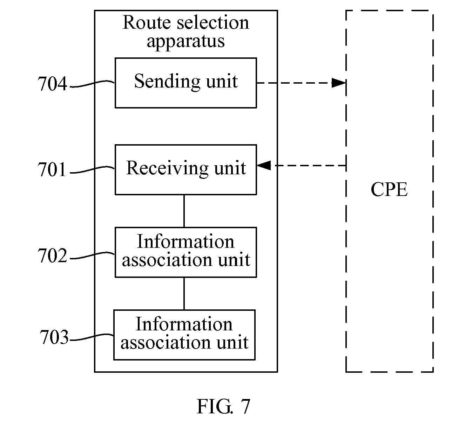

FIG. 7 is a schematic structural diagram of another apparatus for route selection of a host in a multihoming site according to an embodiment of the present invention. The apparatus includes a receiving unit 701, an information association unit 702, a route selection unit 703, and a sending unit 704, where:

The sending unit 704 is configured to send a transition technology information request message to a client premises equipment CPE.

As an embodiment of the present invention, the apparatus may request transition technology information by using some existing request configuration messages such as a DHCPv4 Solicit message, a DHCPv6 Solicit message, or a Router Solicit message. The DHCPv4 Solicit message applies to a scenario where the CPE delivers the transition technology information by using an IPv4 protocol, while the DHCPv6 Solicit message and the Router Solicit message apply to a scenario where the CPE delivers the transition technology information by using an IPv6 protocol.

Of course, this embodiment of the present invention does not limit a method used by the host for delivering the transition technology information request message. The host may even use a newly defined standard to send a dedicated transition technology information request message, instead of using an existing request configuration message to send the transition technology information request message.

The receiving unit 701 is configured to receive the transition technology information sent by the CPE.

In this embodiment of the present invention, the transition technology information in the CPE may be configured in advance, or may be some parameters of a DHCPv4 or DHCPv6 server that are received by the CPE and are generated according to a certain rule. The transition technology information may include: a tunnel mode used by a home network of the CPE, and an address conversion mode and a protocol conversion mode used by the home network of the CPE. In addition, if no transition technology is used, that is, if no information about the tunnel mode, the address conversion mode, the protocol conversion mode, and the like is included, the CPE uses the original IPv4/IPv6 for access by default.

As an embodiment of the present invention, the receiving unit 701 may include three receiving modules: a first receiving module, a second receiving module, and a third receiving module. The three receiving modules are divided by logical functions according to different types of request messages sent by the sending unit. In practical implementation, one receiving unit is capable of performing the implementation.

When the transition technology request message sent by the sending unit is a DHCPv4 Solicit message, the first receiving module is configured to receive a DHCPv4 Advertise message which is delivered by the CPE according to a RELAY-REPL message of a DHCPv4 server, where the DHCPv4 Advertise message includes the transition technology information. For the specific information interaction of the whole process, reference may be made to the description of the embodiment corresponding to FIG. 3. Details are not repeated herein.

When the transition technology request message sent by the sending unit is the DHCPv6 Solicit message, the second receiving module is configured to receive a DHCPv6 Advertise message which is delivered by the CPE according to a RELAY-REPL message of a DHCPv6 server, where the DHCPv6 Advertise message includes the transition technology information. For the specific information interaction of the whole process, reference may be made to the description of the embodiment corresponding to FIG. 4. Details are not repeated herein.

When the transition technology request message sent by the sending unit is the Router Solicit message, the third receiving module is configured to receive a Router Advertise message returned by the CPE, where the Router Advertise message includes the transition technology information. It should be noted that even if the sending unit does not send the Router Solicit message, the CPE may also return the transition technology information. For the specific information interaction of the whole process, reference may be made to the description of the embodiment corresponding to FIG. 5. Details are not repeated herein.

The information association unit 702 is configured to associate the transition technology information with an IP address of the CPE and record association information in an entry.

The route selection unit 703 is configured to perform route selection according to the association information in the entry.

In this embodiment, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

In the embodiments, the transition technology information is associated with the IP address of the CPE, that is, the CPE corresponds to a corresponding transition technology, so that the host is capable of clearly learning a transition technology used by a home network of the CPE. Therefore, a proper CPE can be selected during routing, and selecting a best route can be ensured.

Persons of ordinary skill in the art may understand that all or part of the steps of the methods in the embodiments may be implemented by a program instructing relevant hardware. The program may be stored in a computer readable storage medium. When the program is run, the steps of the foregoing methods in the embodiments are performed. The storage medium may be a magnetic disk, an optical disk, a read-only memory (Read-Only Memory, ROM), or a random access memory (Random Access Memory, RAM).

The foregoing specific embodiments further describe the objectives, technical solutions and advantages of the present invention in detail. It should be understood that, the foregoing description is merely about specific embodiments of the present invention, but is not intended to limit the protection scope of the present invention. Any modification, equivalent replacement, or improvement made within the spirit and principle of the present invention should all fall within the protection scope of the present invention.

## Claims

1. A method for route selection of a host in a multihoming site, comprising:
receiving, transition technology information sent by a client premises equipment CPE;
associating, the transition technology information with an Internet Protocol IP address of the CPE and recording association information in an entry; and
performing route selection, according to the association information in the entry.

2. The method according to claim 1, before the receiving, the transition technology information sent by the CPE, further comprising: sending, a transition technology information request message to the CPE.

3. The method according to claim 1, wherein the receiving, the transition technology information sent by the CPE comprises:
receiving, transition technology information configured in the CPE in advance or receiving transition technology information which is generated by the CPE according to a received network message.

4. The method according to claim 2, wherein the transition technology information request message comprises a Dynamic Host Configuration Protocol for IPv4 Solicit DHCPv4 Solicit message, a Dynamic Host Configuration Protocol for IPv6 Solicit DHCPv6 Solicit message, or a router solicit Router Solicit message.

5. The method according to claim 4, when the transition technology information request message is the DHCPv4 Solicit message, before the receiving, the transition technology information sent by the CPE, further comprising:
forwarding, by the CPE, the DHCPv4 Solicit message to a DHCPv4 server through a broadband remote access server BRAS, and receiving, through the BRAS, a relay reply RELAY-REPL message delivered by the DHCPv4 server; wherein
the receiving the transition technology information sent by the CPE comprises:
receiving a Dynamic Host Configuration Protocol for IPv4 Advertise DHCPv4 Advertise message which is delivered by the CPE according to the RELAY-REPL message, wherein the DHCPv4 Advertise message comprises the transition technology information.

6. The method according to claim 4, when the transition technology information request message is the DHCPv6 Solicit message, before the receiving, the transition technology information sent by the CPE, further comprising:
forwarding, by the CPE, the DHCPv6 Solicit message to a DHCPv6 server through a broadband remote access server BRAS, and receiving, through the BRAS, a reply RELAY-REPL message delivered by the DHCPv6 server; wherein
the receiving, the transition technology information sent by the CPE comprises:
receiving a Dynamic Host Configuration Protocol for IPv6 Advertise DHCPv6 Advertise message which is delivered by the CPE according to the RELAY-REPL message, wherein the DHCPv6 Advertise message comprises the transition technology information.

7. The method according to claim 4, wherein when the transition technology information request message is the Router Solicit message, the receiving, the transition technology information sent by the CPE comprises: receiving, a router advertise Router Advertise message returned by the CPE, wherein the Router Advertise message comprises the transition technology information.

8. An apparatus for route selection of a host in a multihoming site, comprising:
a receiving unit, configured to receive transition technology information sent by a CPE;
an information association unit, configured to associate the transition technology information with an Internet Protocol IP address of the CPE, and record association information in an entry; and
a route selection unit, configured to perform route selection according to the association information in the entry.

9. The apparatus according to claim 8, further comprising:
a sending unit, configured to send a transition technology information request message to the CPE.

10. The apparatus according to claim 8, wherein the receiving unit is specifically configured to receive transition technology information configured in the CPE in advance, or receive transition technology information which is generated by the CPE according to a parameter and a configuration.

11. The apparatus according to claim 9, wherein when the transition technology information request message is a DHCPv4 Solicit message, the receiving unit comprises:
a first receiving module, configured to receive a DHCPv4 Advertise message which is delivered by the CPE according to a RELAY-REPL message of a DHCPv4 server, wherein the DHCPv4 Advertise message comprises the transition technology information.

12. The apparatus according to claim 9, wherein when the transition technology information request message is a DHCPv6 Solicit message, the receiving unit comprises:
a second receiving module, configured to receive a DHCPv6 Advertise message which is delivered by the CPE according to a RELAY-REPL message of a DHCPv6 server, wherein the DHCPv6 Advertise message comprises the transition technology information.

13. The apparatus according to claim 9, wherein when the transition technology information request message is a Router Solicit message, the receiving unit comprises:
a third receiving module, configured to receive a Router Advertise message sent by the CPE, wherein the Router Advertise message comprises the transition technology information.
